# EUROPÄISCHE PATENTSCHRIFT

(11) **EP 3 144 188 B1**
(45) Veröffentlichungstag und Bekanntmachung des Hinweises auf die Patenterteilung: **11.04.2018**
(21) Anmeldenummer: 16194223.0
(22) Anmeldetag: 13.10.2011
(51) Int. Cl.: B60R 25/02

(54) **VORRICHTUNG ZUR VERLAGERUNG EINES SPERRELEMENTES**
DEVICE FOR ACTUATING A LOCKING ELEMENT
DISPOSITIF POUR DÉPLACER UN ÉLÉMENT DE BLOCAGE

(30) Priorität: 13.10.2010 DE 102010038160
(43) Veröffentlichungstag der Anmeldung: 22.03.2017
(62) Teilanmeldung aus: 11768020.7
(73) Patentinhaber: Huf Hülsbeck & Fürst GmbH & Co. KG, 42551 Velbert (DE)
(72) Erfinder: Trischberger, Werner, 85229 Markt Indersdorf (DE)
(74) Vertreter: Vogel, Andreas

(56) Entgegenhaltungen:
- DE-A1- 1 780 228
- DE-A1- 3 004 762
- DE-A1- 10 016 095
- GB-A- 2 018 882
- US-A- 4 400 954

## Beschreibung

Die Erfindung betrifft eine Vorrichtung zur Verlagerung eines Sperrelementes eines funktionswesentlichen Bauteils, insbesondere einer Lenksäule eines Kraftfahrzeuges, mit einem Schließzylinder, der einen drehbaren Zylinderkern mit einem Schlüsselkanal aufweist, einem am Schließzylinder angeordneten Steuerglied, das mit dem Sperrelement derart in Wirkverbindung steht, dass bei einer Drehung des Zylinderkerns das Sperrelement zwischen einer Verriegelungsstellung und einer Entriegelungsstellung bringbar ist, wobei der Schließzylinder ein Erkennungselement aufweist, das zwischen einer ausgefahrenen und einer eingefahrenen Lage bewegbar ist, wobei bei einem schlüsselfreien Schlüsselkanal das Erkennungselement in der eingefahrenen Lage sich befindet und bei einem eingeführten Schlüssel im Schlüsselkanal das Erkennungselement in der ausgefahrenen Lage sich befindet, eine Sicherheitssperre vorgesehen ist, die in einen aktivierten Zustand und einen deaktivierten Zustand bringbar ist und ein Koppelelement aufweist, das mit dem Sperrelement sowie mit dem Steuerglied in Wirkverbindung steht, wobei in dem deaktivierten Zustand die Sicherheitssperre eine Bewegung des Sperrelementes zulässt und das Erkennungselement in der eingefahrenen Lage sich befindet, bei der das Erkennungselement entkoppelt vom Koppelelement ist, und in dem aktivierten Zustand die Sicherheitssperre eine Bewegung des Sperrelementes aus der Entriegelungsstellung in die Verriegelungsstellung blockiert und das Erkennungselement in der ausgefahrenen Lage sich befindet. Zudem betrifft die Erfindung ein Verfahren zur Montage einer soeben genannten Vorrichtung.

In der DE10016095 A1 ist ein Lenkschloss für Kraftfahrzeuge beschrieben, bei dem über eine Drehung eines Zylinderkerns eines Schließzylinders ein Sperrelement zwischen einer Verriegelungsstellung und einer Entriegelungsstellung bewegt werden kann. Hierbei ist zwischen dem Sperrelement und dem Zylinderkern ein bewegbares Fühlglied und eine parallel zur Zylinderachse verlaufende Hubstange vorgesehen. Ist ein Schlüssel im Zylinderkern eingeführt, wird dieser Zustand durch das Fühlglied erkannt, wobei gleichzeitig das Fühlglied die Hubstange in ihrer Position hält, wobei gleichzeitig eine Verschiebung des Sperrelementes in die Verriegelungsstellung blockiert ist. Dieses Lenkschloss zeichnet sich durch hervorragende Funktionsweise aus, dennoch hat sich gezeigt, dass in einigen Anwendungsfällen eine kleinere Gesamtdimensionierung notwendig sein kann. (siehe auch US4400954A) Es ist Aufgabe der vorliegenden Erfindung, eine Vorrichtung zur Verlagerung des Sperrelementes zu schaffen, die kompakter gebaut ist und die den hohen Anforderungen einer funktionsgerechten Bewegung des Sperrelementes gerecht wird. Des Weiteren soll ein Verfahren zu ihrer Montage möglichst einfach und unkompliziert sein.
Die Aufgabe der vorliegenden Erfindung wird durch sämtliche Merkmale der beiden unabhängigen Patentansprüche gelöst. In den abhängigen Patentansprüchen sind mögliche Ausführungsformen beschrieben.
Hierzu ist erfindungsgemäß vorgesehen, dass die Sicherheitssperre ein Hebelelement aufweist, das zwischen dem Erkennungselement und dem Koppelelement um eine Drehachse bewegbar angeordnet ist, wobei durch eine Bewegung des Erkennungselementes das Hebelelement zwischen einer Freigabeposition und einer Arretierposition bewegbar ist, in der Arretierposition das Hebelelement am Koppelement angreift, in der Freigabeposition das Hebelelement eine Bewegung des Koppelelementes zulässt, und das Hebelelement derart gelagert ist, dass bei der Bewegung zwischen der Freigabeposition und der Arretierposition die Drehachse verschiebbar ist. Das Hebelelement ist in seiner Freigabeposition losgelöst zum Koppelelement sowie zum Sperrelement. Befindet sich beispielsweise das Sperrelement in seiner Verriegelungsstellung, ist das Hebelelement entkoppelt zum Sperrelement. Erst über eine entsprechende Bewegung des Zylinderkerns sowie des Steuergliedes erfolgt eine Bewegung des Sperrelementes in Richtung Entriegelungsstellung, wobei in einer definierten Lage des Koppelelementes das Hebelelement derart am Koppelelement eingreift, dass das Koppelelement in seiner Bewegung blockiert ist.

Eine Bewegung des Hebelelementes zwischen seinen beiden Positionen erfolgt über das Erkennungselement, welches den eingeführten Schlüssel innerhalb des Schlüsselkanals detektiert. Hierbei ist vorzugsweise das Erkennungselement im Bereich des Kopfbereiches des Zylinderkerns angeordnet, an dem der Schlüssel von außen in den Schlüsselkanal eingeführt werden kann. Das Erkennungselement befindet sich vorzugsweise so lange in der ausgefahrenen Lage, bei der das Hebelelement arritierend das Koppelelement hält, bis nahezu erst der gesamte Schlüssel aus dem Schlüsselkanal herausgezogen ist. Da sich das Hebelelement sowohl um eine Drehachse schwenken kann als auch die Drehachse gleichzeitig verschiebbar ist, damit das Hebelelement seine entsprechende Position einnimmt, wird auf einfache Art und Weise die Gesamtkonstruktion der erfindungsgemäßen Vorrichtung kompakt ausgeführt. Gleichzeitig zeichnet sich die Sicherheitssperre in ihrer Kinematik als funktionssicher aus, da insbesondere das Hebelelement mit seiner verlagerbaren Drehachse zuverlässig vom Erkennungselement angetrieben werden kann und gleichzeitig sicher in seine jeweilige Position gebracht werden kann, ohne dass die Gefahr besteht, dass ein ungewolltes Loslösen aus der Arretierposition des Hebelelementes erfolgt, wodurch eine ungewollte Bewegung des Sperrelementes aus der Entriegelungsstellung in die Verriegelungsstellung ausgelöst wird. Insbesondere das Hebelelement mit seiner verlagerbaren Drehachse trägt dazu bei, dass die Dimensionierung der erfindungsgemäßen Vorrichtung gering gehalten werden kann.

In einer weiteren möglichen Ausführungsform der Erfindung kann das Hebelelement derart gelagert sein, dass bei der Bewegung zwischen der Freigabeposition und der Arretierposition mindestens zwei Bewegungen ausgeführt sind, wobei eine erste Bewegung eine Drehbewegung um die Drehachse ist und eine zweite Bewegung durch eine Verschiebung des Hebelelementes entlang einer definierten Kurvenbahn bestimmt ist, wobei insbesondere die zweite Bewegung eine translatorische Bewegung ist. Beispielsweise ist es denkbar, dass von der Überführung des Hebelelementes aus der Freigabeposition in die Arretierposition die erste und die zweite Bewegung des Hebelelementes gleichzeitig verlaufen. Ebenfalls ist es möglich, dass die beiden Bewegungen sequentiell hintereinander verlaufen oder zumindest teilweise sich überlagern. Befindet sich das Sperrelement in der Entriegelungsstellung, kann über ein Herausziehen des Schlüssels aus dem Schlüsselkanal eine entsprechende Bewegung des Erkennungselementes ausgelöst werden. Da das Erkennungselement mit dem Hebelelement gekoppelt ist, schwenkt das Hebelelement um seine Drehachse aus der Arretierposition in die Freigabeposition. Das bedeutet, dass das Hebelelement lediglich eine Bewegung ausübt, die eine reine Drehbewegung um den Drehpunkt sein kann. Da das Koppelelement vorzugsweise federbelastet ist, bewegt sich das Koppelelement selbstständig, wenn das Hebelelement die Arretierposition verlassen hat.

Das Hebelelement führt hingegen eine aus mindestens zwei Bewegungen bestehende Gesamtbewegung aus, wenn das Sperrelement von der Verriegelungsstellung in die Entriegelungsstellung überführt werden soll. Hierbei wird über die Einführung eines Schlüssels in den Schlüsselkanal zunächst das Erkennungselement bewegt, welches eine entsprechende Drehbewegung des Hebelelementes um eine Drehachse bewirkt, wobei das Hebelelement seine Freigabeposition verlässt, aber noch nicht die Arretierposition nach dieser ersten Drehbewegung erreicht hat. Während dieser ersten Drehbewegung des Hebelelementes erfolgt gleichzeitig über die Drehung des Schließzylinders eine Bewegung des am Schließzylinder angeordneten Steuergliedes, welches das Koppelelement und somit das Sperrelement aus seiner Verriegelungsstellung in Richtung Entriegelungsstellung überführt. Während der Bewegung des Sperrelementes aus der Entriegelungsstellung in die Verriegelungsstellung erfolgt gleichzeitig eine Mitbewegung des Koppelelementes in Richtung des Hebelelementes. Während sich nun das Koppelelement angetrieben durch das Steuerglied bewegt, kommt es zu einer Kontaktierung des Hebelelementes mit dem Koppelelement. Obwohl das Hebelelement seine Freigabeposition verlassen hat, befindet es sich bei der Kontaktierung des Koppelelementes noch nicht in der Arretierposition. Vorzugsweise übt das Erkennungselement eine entsprechende Kraft auf das Hebelelement aus, damit in der entsprechenden Position des Koppelelementes das Hebelelement in seine endgültige Arretierposition selbstständig verfahren kann. Ausgehend von dieser Zwischenstellung, bei der das Hebelelement zwar seine eigentliche Freigabeposition verlassen hat, jedoch noch nicht die Arretierposition erreicht hat, erfolgt eine zweite Bewegung des Hebelelementes in Richtung der Arretierposition, die eine Richtung entlang einer definierten Kurvenbahn aufweisen kann. Hierbei verschiebt sich die Drehachse des Hebelelementes, um die sich das Hebelelement von seiner Arretierposition in seine Freigabeposition schwenken kann.

Ebenfalls kann vorgesehen sein, dass auf das Hebelelement ein Federelement wirkt, wodurch in der eingefahrenen Lage des Erkennungselementes das Hebelelement losgelöst vom Koppelelement ist und gleichzeitig eine Kontaktierung eines ersten Endes des Hebelelementes mit dem Erkennungselement vorliegt. Somit wird bewirkt, dass das Hebelelement stets mit dem Erkennungselement in Verbindung steht. Falls der Schlüssel aus dem Schlüsselkanal herausgezogen wird, wird dieses sofort durch das Erkennungselement erkannt, welches aus seiner ausgefahrenen Lage in die eingefahrene Lage sich bewegt. Da das Hebelelement stets in Kontakt mit dem Erkennungselement steht, erfolgt gleichzeitig eine Bewegung des Hebelelementes, bei der die Freigabeposition des Hebelelementes verlassen wird. Hierbei verschwenkt das Hebelelement um eine Drehachse, wobei gleichzeitig die Drehachse sich aufgrund einer Hubbewegung des Hebelelementes verlagern kann. In einer definierten Position des Hebelelementes kommt es schließlich zu einer Kontaktierung des Hebelelementes mit dem Koppelelement, wobei eine Zwischenposition des Hebelelementes erreicht ist. In dieser Zwischenposition steht stets das Hebelelement mit dem Erkennungselement in Kontakt. In dieser Zwischenposition des Hebelelementes erfolgt gleichzeitig eine Bewegung des Koppelelementes. Hat das Koppelelement eine definierte Lage erreicht, übt das Federelement eine entsprechende Kraft auf das Hebelelement aus, wobei das Hebelelement selbstständig aus der Zwischenposition in die Arretierposition verfährt. Hierbei erfolgt eine Bewegung des Hebelelementes in mindestens zwei Bewegungsrichtungen, wobei gleichzeitig das Hebelelement eine Drehbewegung und eine Hubbewegung ausführt. Während der Hubbewegung wird die Drehachse des Hebelelementes mit verfahren.

Eine weitere die Erfindung verbessernde Maßnahme kann vorsehen, dass eine Lagerung des Hebelelementes vorgesehen ist, die eine Bewegung des Hebelelementes in mindestens zwei Richtungen ermöglicht. Hierbei kann die Lagerung unterschiedliche Geometriegestaltungen aufweisen, damit das Hebelelement entsprechend der Lagerung in seiner Bewegung in die jeweilige Position zuverlässig geführt werden kann, ohne dass eine Kippbewegung senkrecht zur Drehbewegung um die Drehachse des Hebelelementes erfolgen kann. Gleichzeitig kann die Lagerung geometrisch derart ausgestaltet sein, dass die Bewegungen des Hebelelementes zwischen seiner Freigabeposition und der Arretierposition unterstützt und begünstigt werden.

Weiterhin kann vorgesehen sein, dass das Hebelelement ein zweites Ende aufweist, das im aktivierten Zustand der Sicherheitssperre in das Koppelelement formschlüssig eingreift. Das zweite Ende wie auch das erste Ende des Hebelelementes können fingerartig ausgestaltet sein. In einer möglichen Ausgestaltung der Erfindung kann das Koppelelement eine Ausnehmung aufweisen, wobei in der Arretierposition des Hebelelementes das zweite Ende des Hebelelementes in der Ausnehmung sich befindet. Die Ausnehmung kann derart ausgestaltet sein, dass kurzzeitig das Hebelelement mit seinem zweiten Ende kräftefrei in der Ausnehmung sich befindet, das bedeutet, dass das zweite Ende des Hebelelementes kontaktlos innerhalb der Aufnahme sich befinden kann. In der endgültigen Arretierposition kontaktiert das zweite Ende des Hebelelementes schließlich das Koppelelement im Bereich der Ausnehmung. Das Federelement übt eine entsprechende Kraft auf das Hebelelement aus, so dass die Arretierposition des Hebelelementes innerhalb der Ausnehmung des Koppelelementes zuverlässig gehalten ist. Gleichzeitig befindet sich das Erkennungselement in seiner ausgefahrenen Lage.

Ebenfalls ist es denkbar, dass das Koppelelement eine Auflagefläche aufweist, wobei während der Bewegung des Sperrelementes zwischen der Verriegelungsstellung und Entriegelungsstellung die Auflagefläche sich relativ zum Hebelelement bewegt und gleichzeitig eine Kontaktierung des zweiten Endes des Hebelelementes an der Auflagefläche vorliegt. Während sich das Hebelelement sich in der Zwischenposition befindet, bei der es aus seiner Freigabeposition in Richtung Arretierposition sich bewegt, kontaktiert das Hebelelement die Auflagefläche. Während dieser Zeit erfolgt eine Bewegung des Sperrelementes aus seiner Verriegelungsstellung in Richtung Entriegelungsstellung, wobei gleichzeitig das Koppelelement sich mitbewegt. Erreicht das Koppelelement seine definierte Position, kann das zweite Ende des Hebelelementes in die Ausnehmung des Koppelelementes hineinfahren und somit eine Blockierung der Bewegung des Koppelelementes bewirken. In einer möglichen Ausgestaltung der Erfindung kann die Ausnehmung in der Auflagefläche integriert sein. Um eine leichtgängige Kinematik und Funktionsweise der Gesamtvorrichtung zu erreichen, kann das Steuerglied eine Hubkurve aufweisen, die bei einer Drehung des Zylinderkerns auf das Koppelelement wirkt, wodurch das Koppelelement eine Bewegung erfährt, wobei insbesondere das Koppelelement eine translatorische Bewegung erfährt.

Ebenfalls ist es denkbar, dass ein Gehäuse vorgesehen ist, in dem die Sicherheitssperre mit dem Schließzylinder angeordnet ist, wobei das Gehäuse eine Montageöffnung zum Einsetzen des Hebelelementes aufweist, wobei die Montageöffnung mit einer Geometrie ausgeführt ist, die als Montagehilfe dient. Beispielsweise kann vorgesehen sein, dass die Montageöffnung eine Montagenut und eine Montageausnehmung für eine erste Ausbuchtung des Hebelelementes aufweist, wobei während des Einsetzen des Hebelelementes die erste Ausbuchtung entlang der Montagenut so lange verfahren wird, bis die erste Ausbuchtung in die Montageausnehmung überführt wird und dort die endgültige Endmontagestellung erreicht. Somit zeichnet sich die erfindungsgemäße Vorrichtung durch eine sehr einfache Montage des Hebelelementes einschließlich seines Federelementes aus.
Ebenfalls kann vorgesehen sein, dass eine zweite Ausbuchtung in der Lagerung des Gehäuses beweglich gehalten ist. Hierbei kann die zweite Ausbuchtung die verschiebbare Drehachse des Hebelelementes mit umfassen.
Vorteilhafterweise sind die Ausbuchtungen vorsprungartig aus dem Hebelelement erstreckt angeordnet. Die erste Ausbuchtung kann beispielsweise versetzt zur zweiten Ausbuchtung am Hebelelement angeordnet sein. Nachdem das Hebelelement seine Endmontagestellung innerhalb des Gehäuses der erfindungsgemäßen Vorrichtung erreicht hat, ist das Federelement an der Montageöffnung befestigt und greift gleichzeitig am Hebelelement an. Vorteilhafterweise kann das Federelement in der Montagenut befestigt sein und gleichzeitig in einer Öffnung des Hebelelementes wirken.
Vorteilhafterweise kann die erfindungsgemäße Vorrichtung eine Schlüsselabzugssicherung sein, die lediglich in einer Stellung des Zylinderkerns ein Herausziehen des Schlüssels aus dem Schlüsselkanal erlaubt. Die Schlüsselabzugssicherung bewirkt, dass lediglich in einer Stellung des Zylinderkerns der Schlüssel aus der Vorrichtung entfernt werden kann, wodurch das Sperrelement aus seiner Entriegelungsstellung in die Verriegelungsstellung verfahren kann.

Vorteilhafterweise kann die Vorrichtung zur Verlagerung des Sperrelementes durch eine Steuereinheit überwacht werden, die beispielsweise fahrzeugseitig angeordnet sein kann oder die innerhalb der erfindungsgemäßen Vorrichtung integriert ist. Aus sicherheitstechnischen Gründen kann es vorteilhaft sein, wenn neben der Erfassung des Bewegungsweges des Hebelelementes auch bestimmte Positionen des Erkennungselementes, Zylinderkerns, Steuergliedes oder des Koppelelementes erfasst werden. Dieses kann beispielsweise durch Sensoren, insbesondere Magnetfeldsensoren, erfolgen, die das magnetische Feld eines auf dem Erkennungselement, Zylinderkern, Steuerglied, Koppelelement und/oder Hebelelement angebrachten Permanentmagneten erfassen können. Der Sensor kann alternativ auch fotoelektrisch oder magnetisch dass sich jeweilige Element abtasten. Hierdurch kann eine elektronische Steuerung die Funktionsfähigkeit der erfindungsgemäßen Vorrichtung, insbesondere der Sicherheitssperre überwachen sowie etwaige Manipulationen erkennen.

Das Sperrelement kann aus einem Metall, insbesondere aus Stahl hergestellt sein. Die Materialdicke ist dabei so bemessen, dass weitestgehend eine Materialzerstörung ausgeschlossen werden kann.

Vorzugsweise kann der Kraftangriffspunkt des Federelements auf das Hebelelement zwischen der Drehachse und dem ersten Ende des Hebelelements wirken. Hierdurch wird bewirkt, dass das Hebelelement zuverlässig zwischen der Freigabeposition und der Arretierposition sich bewegen kann.

Die erfindungsgemäße Vorrichtung kann als elektrische Lenkungsverriegelung für Fahrzeuge zum Einsatz kommen, wobei die Vorrichtung zudem problemlos mit insbesondere so genannten "Keyless-Entry-Systemen" kombinierbar ist. Die erfindungsgemäße Vorrichtung kann von außen, beispielsweise per Funksignal oder nach einem stattgefundenen Datenaustausch aktiviert werden, das bedeutet, dass eine Überführung des Sperrelementes in seine jeweilige Stellung über ein Keyless-Entry-System erfolgen kann.

Die vorliegende Erfindung ermöglicht selbstverständlich eine Rückmeldung dahingehend, ob die betreffende Vorrichtung zuverlässig das funktionswesentliche Bauteil, insbesondere die Lenksäule oder einen Gangschalthebel des Kraftfahrzeuges blockiert oder nicht. Dies kann z. B. durch eine optische oder akustische Meldevorrichtung innerhalb des Kraftfahrzeuges dargestellt werden.

Weitere Vorteile, Merkmale und Einzelheiten der Erfindung ergeben sich aus der nachfolgenden Beschreibung, in der unter Bezugnahme auf die Zeichnungen mehrere Ausführungsbeispiele der Erfindung im einzelnen beschrieben sind. Dabei können die in den Ansprüchen und in der Beschreibung erwähnten Merkmale erfindungswesentlich sein. Es zeigen:
- Fig. 1: die erfindungsgemäße Vorrichtung mit einem Sperrelement, das sich in seiner Verriegelungsstellung befindet und mit einem Hebelelement, das sich in der Freigabeposition befindet,
- Fig. 2: die Vorrichtung gemäß Figur 1 in einer Schnittansicht,
- Fig. 3: die Vorrichtung gemäß Figur 2, wobei das Sperrelement aus der Verriegelungsstellung in Richtung Entriegelungsstellung bewegt wird,
- Fig. 4: die erfindungsgemäße Figur 3 in einer weiteren Stellung,
- Fig. 5: die erfindungsgemäße Vorrichtung gemäß Figur 4 in einer weiteren Stellung,
- Fig. 6: die erfindungsgemäße Vorrichtung gemäß Figur 5, wobei das Hebelelement in eine Ausnehmung sich erstreckt und die Arretierposition einnimmt,
- Fig. 7: die erfindungsgemäße Vorrichtung gemäß Figur 2, wobei das Sperrelement in Richtung Verriegelungsstellung sich bewegt und das Hebelelement in der Freigabeposition sich befindet und
- Fig. 8: eine weitere Ausgestaltungsalternative eines Hebelelementes, welches in eine erfindungsgemäße Vorrichtung gemäß Figur 1 einsetzbar ist.

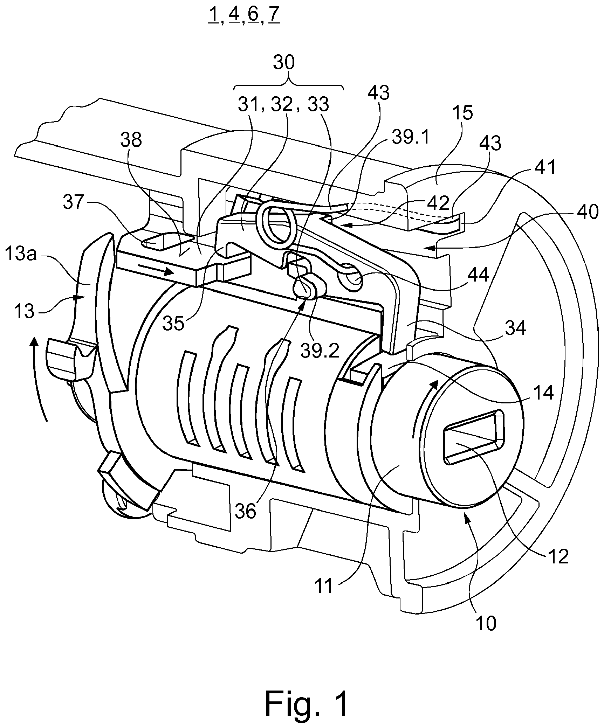

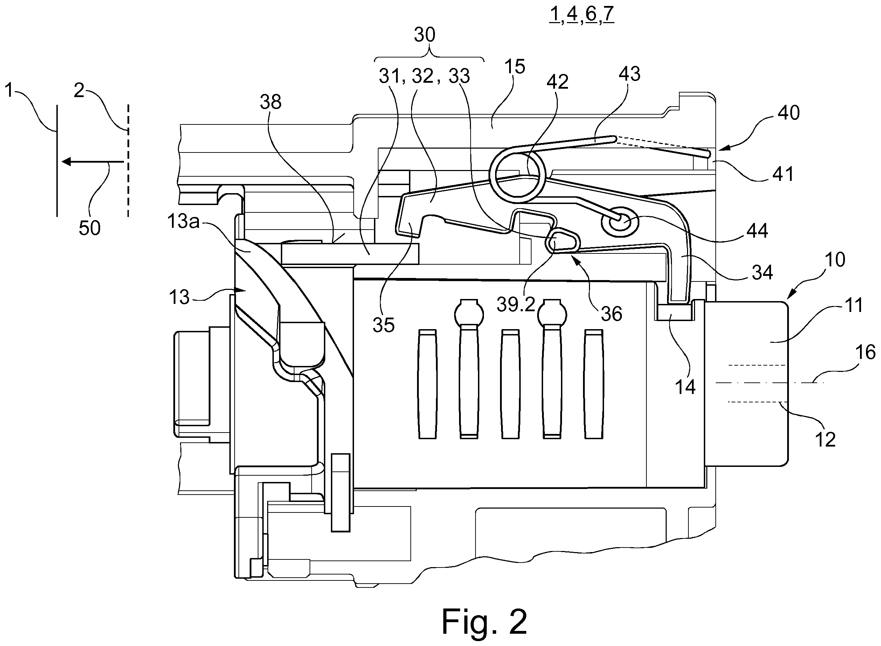

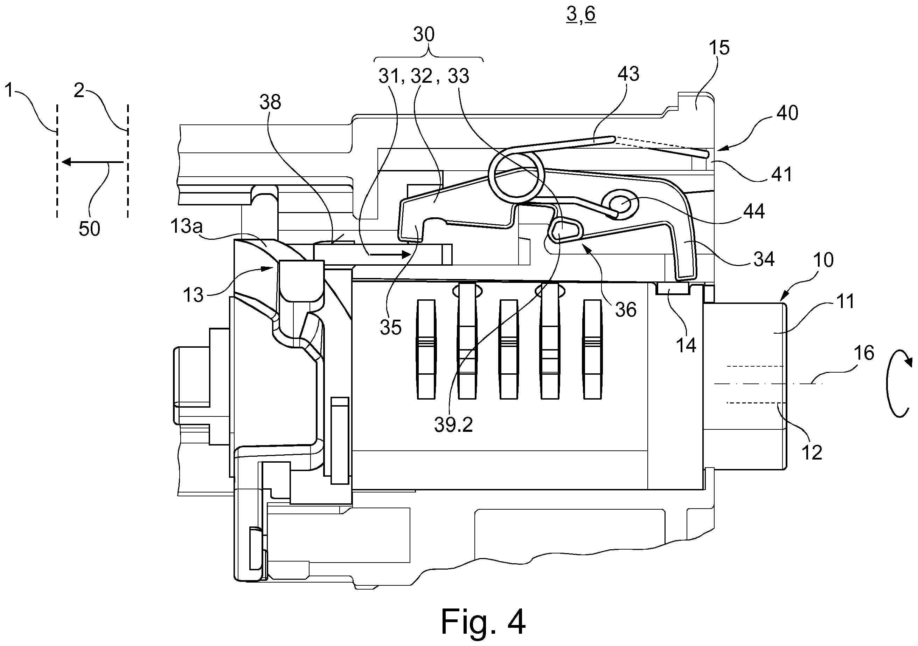

In Figur 1 ist eine erfindungsgemäße Vorrichtung zur Verlagerung eines Sperrelementes 50 dargestellt. Wie auch in den Figuren 2 bis 7 gezeigt ist, ist das Sperrelement 50 durch den Pfeil 50 verdeutlicht, wobei das Sperrelement 50 im vorliegenden Ausführungsbeispiel in seiner Verriegelungsstellung 1 in ein funktionswesentliches Bauteil, hier eine Lenksäule eines Kraftfahrzeuges, eingreift. In Figur 2 ist die Verriegelungsstellung 1 des

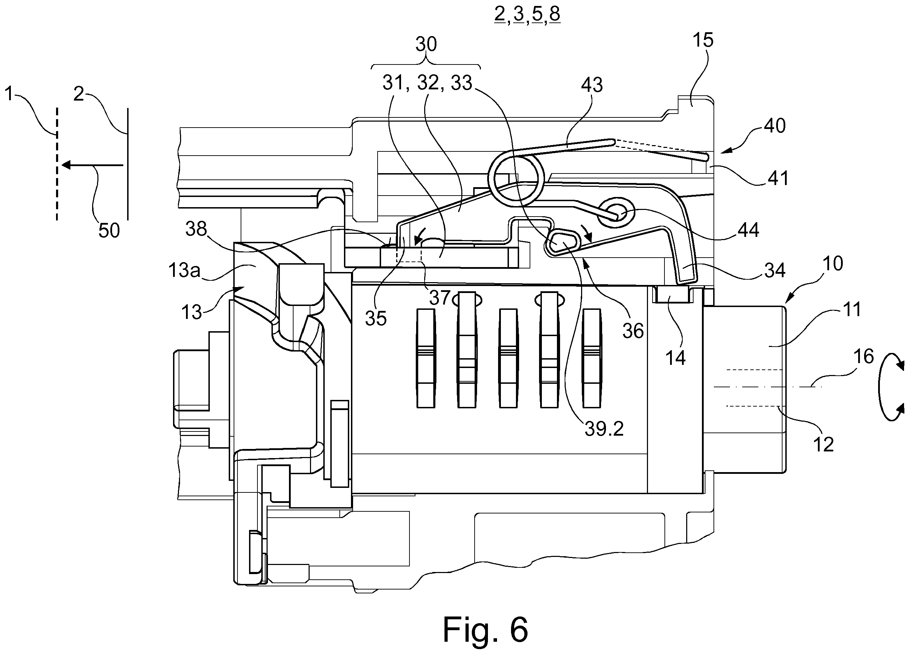

Sperrelementes 50 gezeigt. In Figur 6 befindet sich hingegen das Sperrelement 50 in seiner Entriegelungsstellung 2, in der es losgelöst von der Lenksäule sich befindet.

Zudem ist ein Schließzylinder 10 vorgesehen, der einen drehbaren Zylinderkern 11 mit einem Schlüsselkanal 12 aufweist. Am Schließzylinder 10 ist ferner ein Steuerglied 13 vorgesehen, das eine vorsprungartige Geometrie in Form einer Hubkurve 13a aufweist.

Das Sperrelement 50 ist mit einem Koppelelement 31 fest verbunden. Wenn sich das Sperrelement 50 in seine jeweilige Stellung 1, 2 bewegt, erfolgt gleichzeitig eine Verschiebung des Koppelelementes 31. Das Koppelelement 31 hat den Zweck, das Sperrelement 50 mit einer Sicherheitssperre 30 zu verbinden, die im Folgenden beschrieben wird. In einem weiteren, nicht explizit dargestelltem Ausführungsbeispiel kann das Koppelelement 31 auch Bestandteil des Sperrelementes 50 sein. Das bedeutet, dass das Koppelelement 31 und das Sperrelement 50 ein gemeinsames Bauteil bilden.

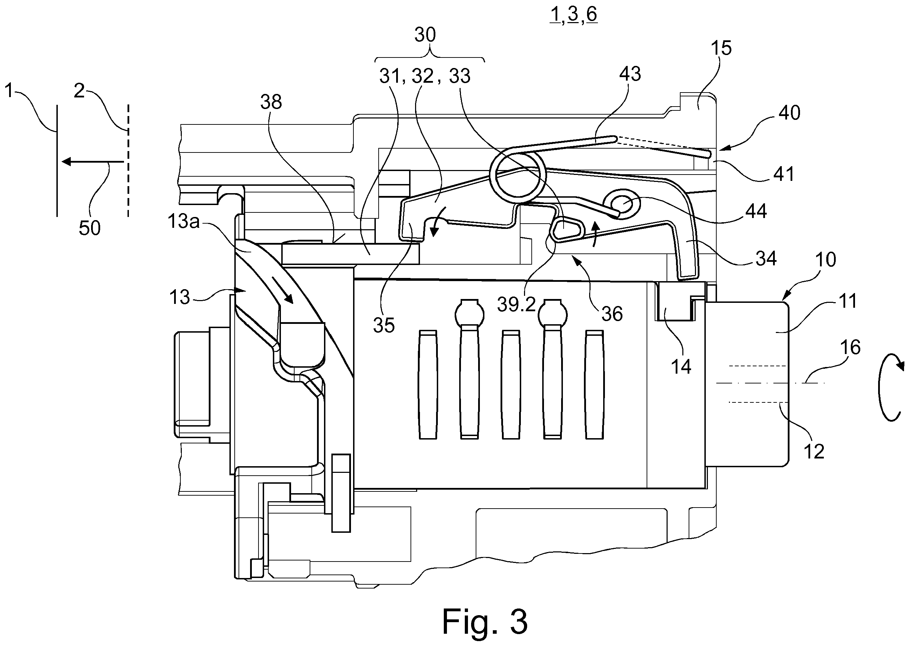

Der Schließzylinder 10 ist mit einem bewegbaren Erkennungselement 14 ausgestattet, das zwischen einer ausgefahrenen 3 und einer eingefahrenen Lage 4 bewegbar ist. Figur 2 zeigt das Erkennungselement 14 in der eingefahrenen Lage 4. Die Figuren 3 bis 6 zeigen das Erkennungselement 14 in der ausgefahrenen Lage 3. Befindet sich ein Schlüssel innerhalb des Schlüsselkanals 12, nimmt das Erkennungselement 14 die ausgefahrene Lage 3 ein. Befindet sich kein Schlüssel im Schlüsselkanal 12, so nimmt das Erkennungselement 14 seine eingefahrene Lage 4 ein.

Die Sicherheitssperre 30 weist ein Hebelelement 32 auf, das mit dem Sperrelement 50, insbesondere mit dem Koppelelement 31 und dem Erkennungselement 14 zusammenwirkt. Das Hebelelement 32 ist zum Einen um eine Drehachse 33 bewegbar angeordnet. Wenn nun ausgehend von Figur 2 ein Schlüssel in den Schlüsselkanal 12 eingeführt wird, bewegt sich das Erkennungselement 14 aus seiner eingefahrenen Lage 4 in die ausgefahrene Lage 3 (siehe Figur 3). Hierbei drückt das Erkennungselement 14 das Hebelelement 32 nach oben, wobei das Hebelelement 32 mehrere Bewegungen ausführt. Zum Einen erfolgt eine Drehung des Hebelelementes 32 um eine Drehachse. Ferner verschiebt sich die Drehachse 33 entlang einer definierten Kurvenbahn nach oben und führt somit eine Hubbewegung aus. In Figur 2 befindet sich das Hebelelement 32 in seiner Freigabeposition 7, bei der es mit seinem ersten Ende 34 am Erkennungselement 14 anliegt. Gleichzeitig ist das zweite Ende 35 losgelöst vom Koppelelement 31. Während nun über die Drehung des Zylinderkerns 11 gleichzeitig das Steuerglied 13 rotatorisch um die Achse 16 sich bewegt, nimmt das Steuerglied 13 das Koppelelement 31 mit, wobei gleichzeitig das Koppelelement 31 mit dem Sperrelement 50 in Richtung des Erkennungselementes 14 verschoben werden. Die Verschiebung des Sperrelementes 50 sowie des Koppelelementes 31 erfolgt translatorisch. Hierbei bewegt sich das Sperrelement 50 aus seiner Verriegelungsstellung 1 in Richtung Entriegelungsstellung 2, die in Figur 6 erreicht ist. In Figur 2 befindet sich die Sicherheitssperre 30 im deaktivierten Zustand 6, in dem das Hebelelement 32 sich in seiner Freigabeposition 7 befindet.

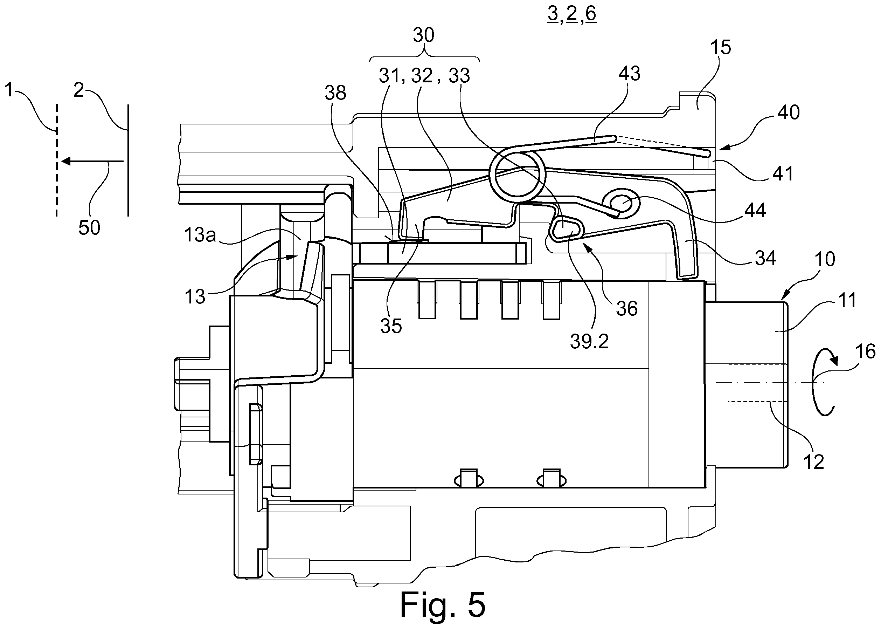

Während sich nun ausgehend von Figur 2 der Zylinderkern 11 um die Achse 16 rotiert, führt das Hebelelement 32 seine oben beschriebene Bewegung aus, wobei gleichzeitig das zweite Ende 35 das Koppelelement 31 auf seine Auflagefläche 38 kontaktiert. Während nun der Zylinderkern 11 weiter um die Achse 16 rotiert, erfolgt eine weitere Linearbewegung des Koppelelementes 31 in Richtung des Erkennungselementes 14, wobei das Hebelelement 32 ausgehend von Figur 3 bis Figur 5 seine Zwischenposition unbeweglich beibehält. Das Koppelelement 31 hat eine Ausnehmung 37, in die das zweite Ende 35 des Hebelelementes 32 gemäß Figur 6 hineinfahren kann. In Figur 6 befindet sich das Hebelelement 32 in der Arretierposition 8, bei der eine Bewegung des Koppelelementes 31 sowie des Sperrelementes 50 in Richtung Lenksäule verhindert ist. In dieser Figur 6 nimmt das Sperrelement 50 seine Entriegelungsstellung 2 ein, wobei gleichzeitig die Sicherheitssperre 30 sich im aktivierten Zustand 5 befindet. Wie ausgehend von Figur 5 gezeigt ist, führt das Hebelelement 32 mit seiner Drehachse 33 eine Hubbewegung nach unten aus. Damit diese Bewegung des Hebelelementes 32 in die Arretierposition 8 stattfindet, ist ein Federelement 43 vorgesehen, welches eine Federkraft auf das Hebelelement 32 in Richtung Zylinderkern 11 ausübt. Hierdurch wird bezweckt, dass in der eingefahrenen Lage 4 des Erkennungselementes 14 das Hebelelement 32 losgelöst vom Koppelelement 31 ist und gleichzeitig eine Kontaktierung des ersten Endes 34 des Hebelelementes 32 mit dem Erkennungselement 14 vorliegt.

Einer der Besonderheiten des gezeigten Ausführungsbeispieles ist, dass das Hebelelement 32 derart gelagert ist, dass bei der Überführung des Sperrelementes 50 von der Verriegelungsstellung 1 in die Entriegelungsstellung 2 das Hebelelement 32 bei der Bewegung zwischen der Freigabeposition 7 und der Arretierposition 8 mehrere Bewegungen ausführt, wobei eine erste Bewegung eine Drehbewegung um eine Drehachse ist und eine zweite Bewegung durch eine Verschiebung des Hebelelementes 32 entlang einer definierten Kurvenbahn bestimmt ist. Somit kann das Hebelelement 32 sich um eine Drehachse verschwenken als auch eine Bewegung, insbesondere Hubbewegung mit der Drehachse 33 ausführen.

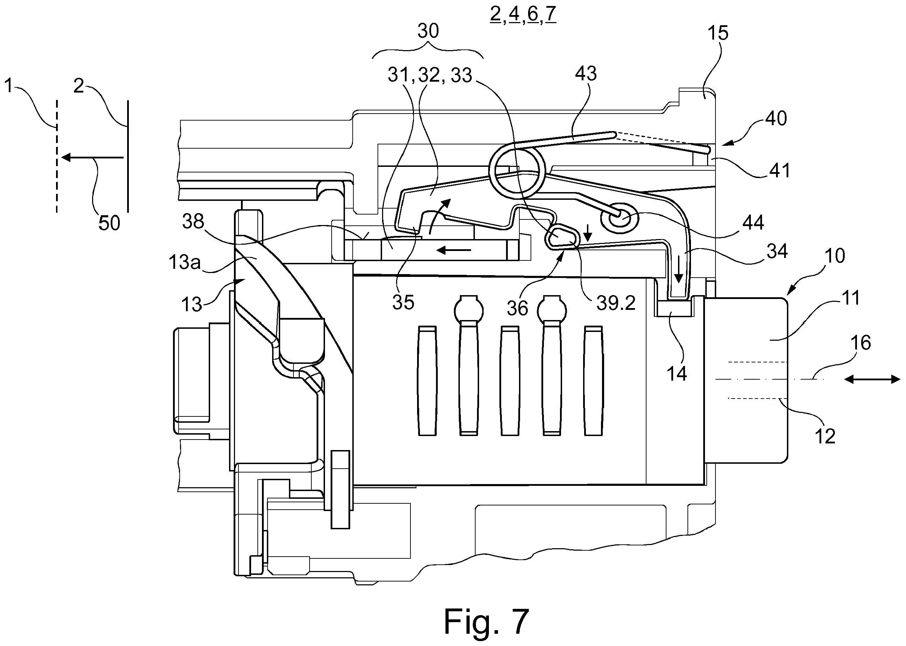

Das Hebelelement 32 ist ferner derart innerhalb des Gehäuses 15 gelagert, dass bei der Überführung des Sperrelementes 50 von der Entriegelungsstellung 2, die in Figur 6 gezeigt ist, in die Verriegelungsstellung 1, die in Figur 7 gezeigt ist, das Hebelelement 32 lediglich eine Bewegung um die Drehachse 33 ausführt. Damit das Hebelelement 32 eine sichere und zuverlässige Bewegung in seine jeweilige Position 7, 8 ausführen kann, ist eine entsprechende Lagerung 36 innerhalb des Gehäuses 15 vorgesehen. Gemäß Figur 6 greift das zweite Ende 35 des Hebelelementes 32 in die Ausnehmung 37 des Koppelelementes 31 formschlüssig ein. Die Auflagefläche 38, die mit der Ausnehmung 37 ausgeführt ist, bildet mit dem Koppelelement 31 ein gemeinsames Bauteil. Wenn das zweite Ende 35 in die Ausnehmung 37 einfährt (siehe Figur 6), befindet sich das zweite Ende 35 kurzzeitig kräftefrei und kontaktlos in der Ausnehmung 37 des Koppelelementes 31. Da das Steuerglied 13 ausgehend von Figur 5 anschließend sich um wenige Winkelgrade um die Achse 16 zurückdreht, erfolgt eine Zurückbewegung des Koppelelementes 31 in Richtung Lenksäule, so dass in der Arretierposition 8 schließlich das zweite Ende 35 des Hebelelementes 32 in der Ausnehmung 37 sich befindet und eine Kontaktierung zwischen dem zweiten Ende 35 des Hebelelementes 32 mit einem Bereich der Ausnehmung 37 vorliegt. Wie in Figur 6 zu erkennen ist, ist der Zylinderkern 11 mit dem Steuerglied 13 in einer derartigen Drehlage, dass ein Abstand zwischen dem Steuerglied 13 und dem Koppelelement 31 besteht. Ausgehend von Figur 2 bis Figur 4 liegt das Steuerglied 13 jedoch am Koppelelement 31 an, damit bei einer Bewegung des Zylinderkerns 11 um die Achse 16 eine entsprechende Kraft auf das Sperrelement 50 ausgeübt werden kann, damit das Sperrelement 50 aus der Verriegelungsstellung 1 in die Entriegelungsstellung 2 überführt werden kann.

Zudem ist in Figur 1 zu erkennen, dass das Hebelelement 32 eine erste Ausbuchtung 39.1 aufweist, die seitlich am Hebelelement 32 angeordnet ist und senkrecht zur Längserstreckung des Hebelelementes 32 verläuft. Ferner weist das Gehäuse 15 eine Montageöffnung 40 mit einer Montagenut 41 und eine Montageausnehmung 42 für die erste Ausbuchtung 39.1 auf. Während des Einsetzens des Hebelelementes 32 verfährt die erste Ausbuchtung 39.1 entlang der Montagenut 41 so lange, bis die erste Ausbuchtung 39.1 in die Montageausnehmung 42 überführt wird und dort ihre endgültige Endmontagestellung erreicht. Ferner ist eine zweite Ausbuchtung 39.2 am Hebelelement 32 ausgeführt, die ebenfalls seitlich am Hebelelement 32 angeordnet ist und senkrecht zur Längserstreckung des Hebelelementes 32 sich erstreckt. Durch die zweite Ausbuchtung 39.2 verläuft die Drehachse 33. Die zweite Ausbuchtung 39.2 ist in der Lagerung 36 des Gehäuses 15 beweglich gehalten. Beide Ausbuchtungen 39.1, 39.2 sind vorsprungartig, aus dem Hebelelement 32 sich erstreckend ausgeführt. Im vorliegenden Ausführungsbeispiel ist die erste Ausbuchtung 39.1 versetzt zur zweiten Ausbuchtung 39.2 am Hebelelement 32 angeordnet. Damit bei der Montage das Hebelelement 32 zuverlässig in seine Endmontagestellung gebracht wird, wird das Hebelelement 32 gemeinsam mit dem Federelement 43 in die Montageöffnung 40 eingeschoben. Hierbei drückt das Federelement 43 während der Bewegung des Hebelelementes 32 entlang der Montagenut 41 auf das Hebelelement 32. Hat die erste Ausbuchtung 39.1 eine definierte Montagetiefe innerhalb des Gehäuses 15 erreicht, das bedeutet, im vorliegenden Ausführungsbeispiel, dass die erste Ausbuchtung 39.1 oberhalb der Montageausnehmung 42 sich befindet, drückt das Federelement 43 das Hebelelement 32 in die Montageausnehmung 42. Somit erreicht das Hebelelement 32 seine Endmontagestellung, die beispielsweise in Figur 2 gezeigt ist. Hierbei wird in der Endmontagestellung des Hebelelementes 32 das Federelement 43 zum Einen in der Montageöffnung 40 an ihrem vorderen Bereich gehalten und zum Anderen in einer Öffnung 43 des Hebelelementes 32.

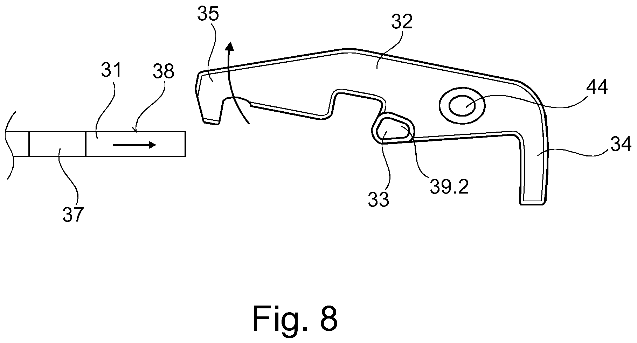

Figur 8 zeigt eine weitere Ausführungsform der Sicherheitssperre 30, wobei im Gegensatz zur Figur 2 das zweite Ende 35 des Hebelelementes 32 beabstandet und vor dem Koppelelement 31 liegt, wenn die Sicherheitssperre 30 sich in ihrem deaktivierten Zustand 6 befindet. Erfolgt nun gemäß Figur 3 und den weiteren Figuren eine entsprechende Drehbewegung des Schließzylinders 10, um das Sperrelement 50 aus der Verriegelungsstellung 1 in die Entriegelungsstellung 2 zu überführen, bewegt sich gemäß Figur 8 das Koppelelement 31 in Richtung des zweiten Endes 35 des Hebelelementes 32. Es kommt zu einer Kontaktierung des Koppelelementes 31 mit dem Hebelelement 32, der aufgrund seiner geometrischen schrägen Kontur am zweiten Ende 35 nach oben schwenkt. Anschließend verfährt das zweite Ende 35 des Hebelelementes 32 auf der Auflagefläche 38, bis das zweite Ende 35 in die Ausnehmung 37 des Koppelelementes 31 hinein verfährt, wodurch das Hebelelement 32 seine Arretierposition 8 einnehmen kann. Somit ist das Ausführungsbeispiel gemäß Figur 8 vollständig auf das Ausführungsbeispiel gemäß Figur 1 bis Figur 7 anwendbar. Damit das Hebelelement 32 zuverlässig zwischen der Freigabeposition 7 und der Arretierposition 8 sich bewegen kann, befindet sich der Kraftangriffspunkt des Federelementes 43 gemäß der Figuren 1 bis 8 zwischen der Drehachse 33 und dem ersten Ende 34 des Hebelelementes 32.

### Bezugszeichenliste

- 1: Verriegelungsstellung
- 2: Entriegelungsstellung
- 3: ausgefahrene Lage
- 4: eingefahrene Lage
- 5: aktivierter Zustand
- 6: deaktivierter Zustand
- 7: Freigabeposition
- 8: Arretierposition

- 10: Schließzylinder
- 11: Zylinderkern
- 12: Schlüsselkanal
- 13: Steuerglied
- 13a: Hubkurve
- 14: Erkennungselement
- 15: Gehäuse
- 16: Achse

- 30: Sicherheitssperre
- 31: Koppelelement
- 32: Hebelelement
- 33: Drehachse
- 34: erstes Ende des Hebelelementes
- 35: zweites Ende des Hebelelementes
- 36: Lagerung
- 37: Ausnehmung
- 38: Auflagefläche
- 39: Ausbuchtung
- 39.1: erste Ausbuchtung
- 39.2: zweite Ausbuchtung

- 40: Montageöffnung
- 41: Montagenut
- 42: Montageausnehmung
- 43: Federelement
- 44: Öffnung

- 50: Sperrelement

## Patentansprüche

1. Vorrichtung zur Verlagerung eines Sperrelementes (50) eines funktionswesentlichen Bauteils, insbesondere einer Lenksäule eines Kraftfahrzeuges, mit
einem Schließzylinder (10), der einen drehbaren Zylinderkern (11) mit einem Schlüsselkanal (12) aufweist,
einem am Schließzylinder (10) angeordneten Steuerglied (13), das mit dem Sperrelement (50) derart in Wirkverbindung steht, dass bei einer Drehung des Zylinderkerns (11) das Sperrelement (50) in eine Verriegelungsstellung (1) und eine Entriegelungsstellung (2) bringbar ist, wobei
der Schließzylinder (10) ein Erkennungselement (14) aufweist, das zwischen einer ausgefahrenen (3) und einer eingefahrenen Lage (4) bewegbar ist, wobei
bei einem schlüsselfreien Schlüsselkanal (12) das Erkennungselement (14) in der eingefahrenen Lage (4) sich befindet und
bei einem eingeführten Schlüssel im Schlüsselkanal (12) das Erkennungselement (14) in der ausgefahrenen Lage (3) sich befindet,
eine Sicherheitssperre (30) vorgesehen ist, die in einen aktivierten Zustand (5) und einen deaktivierten Zustand (6) bringbar ist und ein Koppelelement (31) aufweist, das mit dem Sperrelement (50) sowie mit dem Steuerglied (13) in Wirkverbindung steht, wobei
in dem deaktivierten Zustand (6) die Sicherheitssperre (30) eine Bewegung des Sperrelementes (50) zulässt und das Erkennungselement (14) in der eingefahrenen Lage (4) sich befindet, bei der das Erkennungselement (14) entkoppelt vom Koppelelement (31) ist, und
in dem aktivierten Zustand (5) die Sicherheitssperre (30) eine Bewegung des Sperrelementes (50) aus der Entriegelungsstellung (2) in die Verriegelungsstellung (1) blockiert und das Erkennungselement (14) in der ausgefahrenen Lage (3) sich befindet,
**dadurch gekennzeichnet,**
**dass** die Sicherheitssperre (30) ein Hebelelement (32) aufweist, das zwischen dem Erkennungselement (14) und dem Koppelelement (31) um eine Drehachse (33) bewegbar angeordnet ist, wobei
durch eine Bewegung des Erkennungselements (14) das Hebelelement (32) zwischen einer Freigabeposition (7) und einer Arretierposition (8) bewegbar ist,
in der Arretierposition (8) das Hebelelement (32) am Koppelement (31) angreift,
in der Freigabeposition (7) das Hebelelement (32) eine Bewegung des Koppelelementes (31) zulässt,
und das Hebelelement (32) derart gelagert ist, dass bei der Bewegung zwischen der Freigabeposition (7) und der Arretierposition (8) die Drehachse (33) entlang einer definierten Kurvenbahn verschiebbar ist, wobei zwei Ausbuchtungen (39) vorgesehen sind, die jeweils an einer Seite des Hebelelementes (32) angeordnet sind, wobei die Ausbuchtungen (39) seitlich am Hebelelement (32) angeordnet sind und senkrecht zur Längserstreckung des Hebelelementes (32) sich erstrecken.

2. Vorrichtung nach Anspruch 1,
**dadurch gekennzeichnet,**
**dass** das Hebelelement (32) derart gelagert ist, dass bei der Überführung des Sperrelementes (50) von der Verriegelungsstellung (1) in die Entriegelungsstellung (2) das Hebelelement (32) bei der Bewegung zwischen der Freigabeposition (7) und der Arretierposition (8) mindestens zwei Bewegungen ausführt, wobei eine erste Bewegung eine Drehbewegung um die Drehachse (33) ist und eine zweite Bewegung durch eine Verschiebung des Hebelelementes (32) entlang einer definierten Kurvenbahn bestimmt ist, wobei insbesondere die zweite Bewegung eine translatorische Bewegung ist.

3. Vorrichtung nach Anspruch 2,
**dadurch gekennzeichnet,**
**dass** die erste und die zweite Bewegung zumindest teilweise überlagert sind.

4. Vorrichtung nach einem der vorhergehenden Ansprüche,
**dadurch gekennzeichnet,**
**dass** das Hebelelement (32) derart gelagert ist, dass bei der Überführung des Sperrelementes (50) von der Entriegelungsstellung (2) in die Verriegelungsstellung (1) das Hebelelement (32) lediglich eine Bewegung, insbesondere eine Drehbewegung um die Drehachse (33) ausführt.

5. Vorrichtung nach einem der vorhergehenden Ansprüche,
**dadurch gekennzeichnet,**
**dass** auf das Hebelelement (32) ein Federelement (43) wirkt, wodurch in der eingefahrenen Lage (4) des Erkennungselementes (14) das Hebelelement (32) losgelöst vom Koppelelement (31) ist und gleichzeitig eine Kontaktierung eines ersten Endes (34) des Hebelelement (32) mit dem Erkennungselement (14) vorliegt.

6. Vorrichtung nach einem der vorhergehenden Ansprüche,
**dadurch gekennzeichnet,**
**dass** eine Lagerung (36) des Hebelelementes (32) vorgesehen ist, die eine Bewegung des Hebelelementes (32) in mindestens zwei Richtungen ermöglicht und/oder dass die Bewegung des Hebelelementes (32) eine Drehbewegung und eine Hubbewegung ist.

7. Vorrichtung nach einem der vorhergehenden Ansprüche,
**dadurch gekennzeichnet,**
**dass** das Hebelelement (32) ein zweites Ende (35) aufweist, das im aktivierten Zustand (5) der Sicherheitssperre (30) in das Koppelelement (31) formschlüssig eingreift und/oder dass das Koppelelement (31) eine Ausnehmung (37) aufweist, wobei in der Arretierposition (8) des Hebelelementes (32) das zweite Ende (35) des Hebelelementes (32) in der Ausnehmung (37) sich befindet.

8. Vorrichtung nach einem der vorhergehenden Ansprüche,
**dadurch gekennzeichnet,**
**dass** das Koppelelement (31) eine Auflagefläche (38) aufweist, wobei während der Bewegung des Sperrelementes (50) zwischen der Verriegelungsstellung (1) und Entriegelungsstellung (2) die Auflagefläche (38) sich relativ zum Hebelelement (32) bewegt und gleichzeitig eine Kontaktierung des zweiten Endes (35) des Hebelelementes (32) an der Auflagefläche (38) vorliegt, wobei insbesondere die Ausnehmung (37) in der Auflagefläche (38) integriert ist.

9. Vorrichtung nach einem der vorhergehenden Ansprüche,
**dadurch gekennzeichnet,**
**dass** das Steuerglied (13) eine Hubkurve (13a) aufweist, die bei einer Drehung des Zylinderkerns (11) auf das Koppelelement (31) wirkt, wodurch das Koppelelement (31) eine Bewegung erfährt, wobei insbesondere das Koppelelement (31) eine translatorische Bewegung erfährt.

10. Vorrichtung nach einem der vorhergehenden Ansprüche,
**dadurch gekennzeichnet,**
**dass** ein Gehäuse (15) vorgesehen ist, in dem die Sicherheitssperre (30) mit dem Schließzylinder (10) angeordnet sind, wobei das Gehäuse (15) eine Montageöffnung (40) zum Einsetzen des Hebelelementes (32) aufweist, wobei die Montageöffnung (40) mit einer Geometrie ausgeführt ist, die als Montagehilfe dient, wobei insbesondere die Montageöffnung (40) eine Montagenut (41) und eine Montageausnehmung (42) für eine erste Ausbuchtung (39) des Hebelelementes (32) aufweist, wobei während des Einsetzen des Hebelelementes (32) die erste Ausbuchtung (39) entlang der Montagenut (41) so lange verfahren wird, bis die erste Ausbuchtung (39) in die Montageausnehmung (42) überführt wird und dort die endgültige Endmontagestellung erreicht.

11. Vorrichtung nach einem der vorhergehenden Ansprüche,
**dadurch gekennzeichnet,**
**dass** eine zweite Ausbuchtung (39) in der Lagerung (36) des Gehäuses (15) beweglich gehalten ist und/oder dass die Ausbuchtungen (39) vorsprungartig aus dem Hebelelement (32) sich erstrecken.

12. Vorrichtung nach einem der vorhergehenden Ansprüche,
**dadurch gekennzeichnet,**
**dass** die erste Ausbuchtung (39) versetzt zur zweiten Ausbuchtung (39) am Hebelelement (32) angeordnet ist und/oder dass das Federelement (43) an der Montageöffnung (40) befestigt ist und gleichzeitig am Hebelelement (32) angreift, wobei insbesondere das Federelement (43) in der Montagenut (41) befestigt ist und gleichzeitig in einer Öffnung (44) des Hebelelementes (32) wirkt.

13. Vorrichtung nach einem der vorhergehenden Ansprüche,
**dadurch gekennzeichnet,**
**dass** eine Schlüsselabzugssicherung vorgesehen ist, die lediglich in einer Stellung (1, 2) des Zylinderkerns (11) ein Herausziehen des Schlüssels aus dem Schlüsselkanal (12) erlaubt und/oder dass der Kraftangriffspunkt des Federelements (43) auf das Hebelelement (32) zwischen der Drehachse (33) und dem ersten Ende (34) des Hebelelements (32) wirkt.

14. Verfahren zur Montage eines Hebelelementes (32) einer Sicherheitssperre (30) einer Vorrichtung zur Verlagerung eines Sperrelementes (50) eines funktionswesentlichen Bauteils, insbesondere einer Lenksäule eines Kraftfahrzeuges, mit
einem Schließzylinder (10), der einen drehbaren Zylinderkern (11) mit einem Schlüsselkanal (12) aufweist,
einem am Schließzylinder (10) angeordneten Steuerglied (13), das mit dem Sperrelement (50) derart in Wirkverbindung steht, dass bei einer Drehung des Zylinderkerns (11) das Sperrelement (50) in eine Verriegelungsstellung (1) und eine Entriegelungsstellung (2) bringbar ist, wobei die Sicherheitssperre (30) in einen aktivierten Zustand (5) und einen deaktivierten Zustand (6) bringbar ist und ein Koppelelement (31) aufweist, das mit dem Sperrelement (50) sowie mit dem Steuerglied (13) in Wirkverbindung steht, wobei
in dem deaktivierten Zustand (6) die Sicherheitssperre (30) eine Bewegung des Sperrelementes (50) zulässt,
in dem aktivierten Zustand (5) die Sicherheitssperre (30) eine Bewegung des Sperrelementes (50) aus der Entriegelungsstellung (2) in die Verriegelungsstellung (1) blockiert,
das Hebelelement (32) um eine Drehachse (33) bewegbar angeordnet ist,
durch eine Bewegung des Zylinderkerns (11) das Hebelelement (32) zwischen einer Freigabeposition (7) und einer Arretierposition (8) bewegbar ist,
in der Arretierposition (8) das Hebelelement (32) am Koppelement (31) angreift,
in der Freigabeposition (7) das Hebelelement (32) eine Bewegung des Koppelelement (31) zulässt,
**dadurch gekennzeichnet, dass**
ein Gehäuse (15) vorgesehen ist, in dem die Sicherheitssperre (30) mit dem Schließzylinder (10) angeordnet sind, wobei das Gehäuse (15) eine Montageöffnung (40) zum Einsetzen des Hebelelementes (32) aufweist, an dem gleichzeitig ein Federelement (43) angeordnet ist,
wobei während des Montagevorganges das Hebelelement (32) gemeinsam mit dem Federelement (43) in die Montageöffnung (40) eingeschoben wird, bis das Hebelelement (32) eine definierte Montagetiefe innerhalb des Gehäuses (15) erreicht, bei der das Federelement (43) das Hebelelement (32) in die Endmontagestellung bringt.

15. Verfahren nach Anspruch 14,
**dadurch gekennzeichnet,**
**dass** in der Endmontagestellung des Hebelelementes (32) das Federelement (43) zum einen in der Montageöffnung (40) gehalten wird und zum anderen in einer Öffnung (43) des Hebelelementes (32) wirkt.

16. Verfahren nach Anspruch 15 oder 14, bei dem das Hebelelement (32) in eine Vorrichtung gemäß der Ansprüche 1 bis 13 einsetzbar ist.

## Claims

1. Device for the displacement of a locking element (50) of a function-essential component, in particular a steering column of a motor vehicle, with a locking cylinder (10), which comprises a rotatable cylinder core (11) with a key channel (12),
a control member (13) arranged on the cylinder lock (10), which is in an operative connection with the locking element (50) in such a manner that, with a rotation of the cylinder core (11), the locking element (50) can be brought into a locking position (1) and an unlocking position (2), wherein
the cylinder lock (10) comprises an identification element (14), which is movable between an extended (3) and a retracted position (4), wherein
in a key-free key channel (12) the identification element (14) is in a retracted position (4) and
with an inserted key in the key channel (12), the identification element (14) is in the extended position (3),
a safety lock (30) is provided, which can be brought into an activated state (5) and a deactivated state (6) and comprises a coupling element (31), which is in operative connection with the locking element (50) as well as with the control member (13), wherein
in the deactivated state (6), the safety lock (30) permits a movement of the locking element (50), and the identification element (14) is in the retracted position (4), in which the identification element (14) is decoupled from the coupling element (31), and
in the activated state (5), the safety lock (30) blocks a movement of the locking element (50) from the unlocking position (2) into the locking position (1), and the identification element (14) is in the extended position (3),
**characterized in that**
the safety lock (30) comprises a lever element (32), which is movably arranged between the identification element (14) and the coupling element (31) around a rotational axis (33), wherein
through a movement of the identification element (14), the lever element (32) is moveable between a release position (7) and an arresting position (8),
in the arresting position (8), the lever element (32) engages on the coupling element (31),
in the release position (7), the lever element (32) permits a movement of the coupling element (31),
and the lever element (32) is mounted in such a manner that, in the movement between the release position (7) and the arresting position (8), the rotational axis (33) is displaceable along a defined curve track, wherein two protrusions (39) are provided, which are each arranged on a side of the lever element (32), wherein the protrusions (39) are arranged laterally on the lever element (32) and extend perpendicularly to the longitudinal extension of the lever element (32).

2. Device according to claim 1,
**characterized in that**
the lever element (32) is mounted in such a manner that, in the transfer of the locking element (50) from the unlocking position (1) into the locking position (2), the lever element (32) executes at least two movements in the movement between the release position (7) and the arresting position (8), wherein a first movement is a rotational movement around a rotational axis (33), and a second movement is defined by a displacement of the lever element (32) along a defined curve track, wherein in particular the second movement is a translational movement.

3. Device according to claim 2,
**characterized in that**
the first and second movement are at least partially superimposed.

4. Device according to one of the preceding claims,
**characterized in that**
the lever element (32) is mounted in such a manner that, in the transfer of the locking element (50) from the unlocking position (2) into the locking position (1), the lever element (32) executes only one movement, in particular a rotational movement around the rotational axis (33).

5. Device according to one of the preceding claims,
**characterized in that**
a spring element (43) acts upon the lever element (32), whereby, in the retracted position (4) of the identification element (14), the lever element (32) is detached from the coupling element (31) and simultaneously, a contacting of a first end (34) of the lever element (32) with the identification element (14) is present.

6. Device according to one of the preceding claims,
**characterized in that**
a mounting (36) of the lever element (32) is provided, which enables a movement of the lever element (32) in at least two directions and/or that the movement of the lever element (32) is a rotational movement and a lifting movement.

7. Device according to one of the preceding claims,
**characterized in that**
the lever element (32) comprises a second end (35) which, in the activated state (5) of the safety lock (30), engages in the coupling element (31) in a form-fitting manner and/or that the coupling element (31) comprises a recess (37), wherein, in the arresting position (8) of the lever element (32), the second end (35) of the lever element (32) is in the recess (37).

8. Device according to one of the preceding claims,
**characterized in that**
the coupling element (31) comprises a support surface (38), wherein, during the movement of the locking element (50) between the locking position (1) and unlocking position (2), the support surface (38) moves relative to the lever element (32), and simultaneously, a contacting of the second end (35) of the lever element (32) is present on the support surface (38), wherein in particular the recess (37) is integrated in the support surface (38).

9. Device according to one of the preceding claims,
**characterized in that**
the control member (13) comprises a lift curve (13a), which acts on the coupling element (31) in a rotation of the cylinder core (11), whereby the coupling element (31) experiences a movement, wherein in particular the coupling element (31) experiences a translational movement.

10. Device according to one of the preceding claims,
**characterized in that**
a housing (15) is provided, in which the safety lock (30) is arranged with the locking cylinder (10), wherein the housing (15) comprises an assembly opening (40) for the insertion of the lever element (32), wherein the assembly opening (40) is designed with a geometry, which serves as an assembly aid, wherein in particular the assembly opening (40) has an assembly nut (41) and an assembly recess (42) for a first protrusion (39) of the lever element (32), wherein during the insertion of the lever element (32), the first protrusion (39) is moved so long along the assembly nut (41), until the first protrusion (39) is transferred into the assembly recess (42) and there reaches the final assembly position.

11. Device according to one of the preceding claims,
**characterized in that**
a second protrusion (39) is moveably held in the mounting (36) of the housing (15) and/or that the protrusions (39) extend projection-like from the lever element (32).

12. Device according to one of the preceding claims,
**characterized in that**
the first protrusion (39) is arranged offset to the second protrusion (39) on the lever element (32) and/or that the spring element (43) is fastened to the assembly opening (40) and simultaneously acts on the lever element (32), wherein in particular the spring element (43) is fastened in the assembly nut (41) and simultaneously acts in an opening (44) of the lever element (32).

13. Device according to one of the preceding claims,
**characterized in that**
a key withdrawal safety device is provided, which allows, only in one position (1, 2) of the cylinder core (11), a withdrawal of the key out of the key channel (12), and/or that the force engagement point of the spring element (43) acts on the lever element (32) between the rotational axis (33) and the first end (34) of the lever element (32).

14. Method for the assembly of a lever element (32) of a safety lock (30) of a device for the displacement of a locking element (50) of a function-essential component, in particular a steering column of a motor vehicle, with
a locking cylinder (10), which comprises a rotatable cylinder core (11) with a key channel (12),
a control member (13) arranged on the locking cylinder (10), which is in operative connection with the locking element (50) in such a manner, that in a rotation of the cylinder core (11), the locking element (50) can be brought into a locking position (1) and an unlocking position (2), wherein the safety lock (30) can be brought into an activated state (5) and a deactivated state (6), and comprises a coupling element (31), which is in operative connection with the locking element (50) as well as with the control member (13), wherein
in the deactivated state (6), the safety lock (30) allows a movement of the locking element (50),
in the activated state (5), the safety lock (30) blocks a movement of the locking element (50) from the unlocking position (2) in the locking position (1),
the lever element (32) is arranged around a rotational axis (33) in a moveable manner,
through a movement of the cylinder core (11), the lever element (32) is moveable between a release position (7) and an arresting position (8),
in the arrest position (8), the lever element (32) acts on the coupling element (31), in the release position (7), the lever element (32) allows a movement of the coupling element (31),
**characterized in that**
a housing (15) is provided, in which the safety lock (30) is arranged with the locking cylinder (10), wherein the housing (15) comprises an assembly opening (40) for the insertion of the lever element (32), on which simultaneously a spring element (43) is arranged,
wherein, during the assembly process, the lever element (32), together with spring element (43), is pushed into the assembly opening (40), until the lever element (32) reaches a defined assembly depth within the housing (15), in which the spring element (43) brings the lever element (32) into the end assembly position.

15. Method according to claim 14,
**characterized in that**
in the end assembly position of the lever element (32), the spring element (43) is, on the one hand, held in the assembly opening (40) and acts, on the other hand, in an opening (43) of the lever element (32).

16. Method according to claim 15 or 14,
in which the lever element (32) is insertable in a device according to the claims 1 to 13.

## Revendications

1. Dispositif destiné à déplacer un élément de blocage (50) d'un composant essentiel au fonctionnement, notamment d'une colonne de direction d'un véhicule automobile, comprenant
un cylindre de fermeture (10) qui présente un noyau de cylindre (11) rotatif doté d'un canal de clé (12),
un organe de commande (13) disposé sur le cylindre de fermeture (10), lequel organe de commande est en liaison active avec l'élément de blocage (50) de manière à ce que lors d'une rotation du noyau de cylindre (11), l'élément de blocage (50) puisse être mis dans une position de verrouillage (1) et dans une position de déverrouillage (2), le cylindre de fermeture (10) présentant un élément de reconnaissance (14) qui est déplaçable entre une position sortie (3) et une position rentrée (4), l'élément de reconnaissance (14), avec un canal de clé (12) dépourvu de clé, se trouvant dans la position rentrée (4), et l'élément de reconnaissance (14), pourvu d'une clé insérée dans le canal de clé (12), se trouvant dans la position sortie (3),
un verrouillage de sécurité (30) étant ménagé, lequel peut être mis dans un état activé (5) et dans un état désactivé (6), et présentant un élément de couplage (31) qui est en liaison active avec l'élément de blocage (50) ainsi qu'avec l'organe de commande (13),
le verrouillage de sécurité (30), à l'état désactivé (6), permettant un mouvement de l'élément de blocage (50) et l'élément de reconnaissance (14) se trouvant dans la position rentrée (4), dans laquelle l'élément de reconnaissance (14) est découplé de l'élément de couplage (31), et
le verrouillage de sécurité (30), à l'état activé (5), bloquant un mouvement de l'élément de blocage (50) de la position de déverrouillage (2) en la position de verrouillage (1) et l'élément de reconnaissance (14) se trouvant dans la position sortie (3),
**caractérisé en ce**
**que** le verrouillage de sécurité (30) présente un élément à levier (32) qui est disposé de manière déplaçable autour d'un axe de rotation (33) entre l'élément de reconnaissance (14) et l'élément de couplage (31),
l'élément à levier (31), en raison d'un mouvement de l'élément de reconnaissance (14), étant déplaçable entre une position de libération (7) et une position de blocage (8),
l'élément à levier (32), en position de blocage (8), ayant prise sur l'élément de couplage (31),
l'élément à levier (32), en position de libération (7), permettant un mouvement de l'élément de couplage (31),
et l'élément à levier (32) étant logé de manière à ce que lors du mouvement entre la position de libération (7) et la position de blocage (8), l'axe de rotation (33) soit déplaçable le long d'une voie courbe définie, deux renflements (39) étant ménagés, lesquels sont respectivement disposés sur un côté de l'élément à levier (32), les renflements (39) étant disposés latéralement sur l'élément à levier (32) et s'étendant perpendiculairement à l'étendue longitudinale de l'élément à levier (32).

2. Dispositif selon la revendication 1,
**caractérisé en ce**
**que** l'élément à levier (32) est logé de manière à ce que lorsque l'élément de blocage (50) passe de la position de verrouillage (1) en la position de déverrouillage (2), l'élément à levier (32), lors du mouvement entre la position de libération (7) et la position de blocage (8), exécute au moins deux mouvements, un premier mouvement étant un mouvement rotatif autour de l'axe de rotation (33) et un deuxième mouvement étant déterminé par un déplacement de l'élément à levier (32) le long d'une voie courbe définie, notamment le deuxième mouvement étant un mouvement translatoire.

3. Dispositif selon la revendication 2,
**caractérisé en ce**
**que** le premier et le deuxième mouvements sont superposés au moins en partie.

4. Dispositif selon l'une quelconque des revendications précédentes,
**caractérisé en ce**
**que** l'élément à levier (32) est logé de manière à ce que lorsque l'élément de blocage (50) passe de la position de déverrouillage (2) en la position de verrouillage (1), l'élément à levier (32) exécute seulement un mouvement, notamment un mouvement rotatif autour de l'axe de rotation (33).

5. Dispositif selon l'une quelconque des revendications précédentes,
**caractérisé en ce**
**qu'**un élément à ressort (43) agit sur l'élément à levier (32), sur quoi, dans la position rentrée (4) de l'élément de reconnaissance (14), l'élément à levier (32) est détaché de l'élément de couplage (31) et une mise en contact d'une première extrémité (34) de l'élément à levier (32) avec l'élément de reconnaissance (14) est simultanément présente.

6. Dispositif selon l'une quelconque des revendications précédentes,
**caractérisé en ce**
**qu'**un logement (36) de l'élément à levier (32) est ménagé, lequel permet un mouvement de l'élément à levier (32) dans au moins deux directions et/ou en ce que le mouvement de l'élément à levier (32) est un mouvement rotatif et un mouvement de levage.

7. Dispositif selon l'une quelconque des revendications précédentes,
**caractérisé en ce**
**que** l'élément à levier (32) présente une deuxième extrémité (35) qui, à l'état activé (5) du verrouillage de sécurité (30), a prise dans l'élément de couplage (31) par adhérence de forme et/ou en ce que l'élément de couplage (31) présente un évidement (37), la deuxième extrémité (35) de l'élément à levier (32), dans la position de blocage (8) de l'élément à levier (32), se trouvant dans l'évidement (37).

8. Dispositif selon l'une quelconque des revendications précédentes,
**caractérisé en ce**
**que** l'élément de couplage (31) présente une surface d'appui (38), la surface d'appui (38), pendant le mouvement de l'élément de blocage (50) entre la position de verrouillage (1) et la position de déverrouillage (2), se déplaçant par rapport à l'élément à levier (32), et une mise en contact de la deuxième extrémité (35) de l'élément à levier (32) sur la surface d'appui (38) étant simultanément présente, notamment l'évidement (37) étant intégré dans la surface d'appui (38).

9. Dispositif selon l'une quelconque des revendications précédentes,
**caractérisé en ce**
**que** l'organe de commande (13) présente une courbe de levage (13a) qui agit sur l'élément de couplage (31) lors d'une rotation du noyau de cylindre (11), sur quoi l'élément de couplage (31) subit un mouvement, notamment l'élément de couplage (31) subissant un mouvement translatoire.

10. Dispositif selon l'une quelconque des revendications précédentes,
**caractérisé en ce**
**qu'**un boîtier (15) est ménagé, dans lequel le verrouillage de sécurité (30) est disposé avec le cylindre de fermeture (10), le boîtier (15) présentant une ouverture de montage (40) pour insérer l'élément à levier (32), l'ouverture de montage (40) étant réalisée avec une géométrie qui sert d'aide au montage, notamment l'ouverture de montage (40) présentant une rainure de montage (41) et un évidement de montage (42) pour un premier renflement (39) de l'élément à levier (32), le premier renflement (39), pendant l'insertion de l'élément à levier (32), étant déplacé le long de la rainure de montage (41) jusqu'à ce que le premier renflement (39) passe dans l'évidement de montage (42) et y atteigne la position de montage finale.

11. Dispositif selon l'une quelconque des revendications précédentes,
**caractérisé en ce**
**qu'**un deuxième renflement (39) est maintenu de manière déplaçable dans le logement (36) du boîtier (15) et/ou en ce que les renflements (39) s'étendent hors de l'élément à levier (32) à la manière de saillies.

12. Dispositif selon l'une quelconque des revendications précédentes,
**caractérisé en ce**
**que** le premier renflement (39) est disposé sur l'élément à levier (32) de manière décalée par rapport au deuxième renflement (39) et/ou en ce que l'élément à ressort (43) est fixé sur l'ouverture de montage (40) et a simultanément prise sur l'élément à levier (32), notamment l'élément à ressort (43) étant fixé dans la rainure de montage (41) et agissant simultanément dans une ouverture (44) de l'élément à levier (32).

13. Dispositif selon l'une quelconque des revendications précédentes,
**caractérisé en ce**
**qu'**un dispositif de sécurité de retrait de clé est ménagé, lequel permet un retrait de la clé hors du canal de clé (12) uniquement dans une position (1, 2) du noyau de cylindre (11), et/ou en ce que le point d'application de force de l'élément à ressort (43) sur l'élément à levier (32) agit entre l'axe de rotation (33) et la première extrémité (34) de l'élément à levier (32).

14. Procédé de montage d'un élément à levier (32) d'un verrouillage de sécurité (30) d'un dispositif de déplacement d'un élément de blocage (50) d'un composant essentiel au fonctionnement, notamment d'une colonne de direction d'un véhicule automobile, comprenant
un cylindre de fermeture (10) qui présente un noyau de cylindre (11) rotatif doté d'un canal de clé (12),
un organe de commande (13) disposé sur le cylindre de fermeture (10), lequel organe de commande est en liaison active avec l'élément de blocage (50) de manière à ce que lors d'une rotation du noyau de cylindre (11), l'élément de blocage (50) puisse être mis dans une position de verrouillage (1) et dans une position de déverrouillage (2),
le verrouillage de sécurité (30) pouvant être mis dans un état activé (5) et dans un état désactivé (6) et présentant un élément de couplage (31) qui est en liaison active avec l'élément de blocage (50) ainsi qu'avec l'organe de commande (13),
le verrouillage de sécurité (30), à l'état désactivé (6), permettant un mouvement de l'élément de blocage (50),
le verrouillage de sécurité (30), à l'état activé (5), bloquant un mouvement de l'élément de blocage (50) de la position de déverrouillage (2) en la position de verrouillage (1),
l'élément à levier (32) étant disposé de manière déplaçable autour d'un axe de rotation (33),
l'élément à levier (32), en raison d'un mouvement du noyau de cylindre (11), étant déplaçable entre une position de libération (7) et une position de blocage (8),
l'élément à levier (32), en position de blocage (8), ayant prise sur l'élément de couplage (31),
l'élément à levier (32), en position de libération (7), permettant un mouvement de l'élément de couplage (31),
**caractérisé en ce qu'**
un boîtier (15) est ménagé, dans lequel le verrouillage de sécurité (30) est disposé avec le cylindre de fermeture (10), le boîtier (15) présentant une ouverture de montage (40) pour insérer l'élément à levier (32), sur lequel un élément à ressort (43) est simultanément disposé,
l'élément à levier (32), pendant l'opération de montage, étant inséré dans l'ouverture de montage (40) conjointement avec l'élément à ressort (43), jusqu'à ce que l'élément à levier (32) atteigne une profondeur de montage définie à l'intérieur du boîtier (15), à laquelle l'élément à ressort (43) met l'élément à levier (32) dans la position de montage finale.

15. Procédé selon la revendication 14,
**caractérisé en ce**
**que** l'élément à ressort (43), dans la position de montage finale de l'élément à levier (32), est maintenu d'une part dans l'ouverture de montage (40) et agit d'autre part dans une ouverture (43) de l'élément à levier (32).

16. Procédé selon la revendication 15 ou 14,
dans lequel l'élément à levier (32) est insérable dans un dispositif selon l'une quelconque des revendications 1 à 13.
